# EUROPEAN PATENT APPLICATION

(11) **EP 2 742 810 A1**
(43) Date of publication of application: **18.06.2014**
(21) Application number: 12425197.6
(22) Date of filing: 13.12.2012
(51) Int. Cl.: A23L 3/04, B05B 15/04

(54) **Sprinkling apparatus, particularly for container processing machines**

(71) Applicant: SIDEL S.p.A. con Socio Unico, Parma (IT)
(72) Inventor: Solfa, Andrea, 43100 Parma (IT)
(74) Representative: D'Angelo, Fabio

(57) **Abstract**

The invention relates to a sprinkling apparatus (1) comprising:
conveying means (3) defining a surface (P) for advancing containers (2) along a main direction (X); and
a flow distribution element (4) arranged above the surface (P) and fluidly connectable with a source of a heat transfer medium at a given temperature;
the flow distribution element (4) comprising a plate (5) and side walls (6) and defining a channel (7) adapted to be flown along by a flow of heat transfer medium; the plate (5) having a plurality of openings (8) such that through them at least a portion of the flow of heat transfer medium is directed to sprinkle over the containers (2) as they advance along the main direction (X); the openings (8) of the flow distribution element (4) being arranged in parallel rows extending along a direction (Y) forming, with the main direction (X), an angle (α) less than 90°.

## Description

### TECHNICAL FIELD

The present invention relates to a sprinkling apparatus. In particular, the invention is concerned with a sprinkling apparatus intended for treating articles, especially containers, in the packaging industry, e.g. in bottling operations by which containers are filled with a pourable product.

### BACKGROUND ART

In the packaging industry, processes are known for the pasteurization of a pourable product contained in containers, such as e.g. bottles, cans, or cartons. This is the case, in particular, with perishable beverages like fruit and vegetable juices, beer and dairy products.

According to these processes, containers that have been filled with a pourable product and properly closed (e.g. crowned, in the case of glass bottles filled with beer or soft drinks) are advanced through a so-called tunnel pasteurizer which typically comprises at least a pre-heating zone, a pasteurization zone and a cooling zone, each of these zones comprising spraying and/or sprinkling means for directing flows of a heat transfer liquid, such as water, onto the containers to heat them above a threshold temperature and subsequently cool them down.

In greater detail, during typical operation, the pourable product in the containers is first heated up in the pre-heating area to a temperature close to the pasteurization temperature, and is subsequently heated in the pre-pasteurization zone to at least the pasteurization temperature. This is generally achieved by spraying the containers with a heat transfer medium heated up to a temperature higher than the pasteurization temperature.

Once past the pasteurization zone, containers are cooled again in the cooling area, typically by being sprinkled with a heat transfer medium at a lower temperature, to be subsequently discharged at an exit of the pasteurization tunnel.

Different recirculation systems are known for temperature control, and several arrangements are known e.g. for providing a plurality of heating sub-zones having increasingly higher temperatures, so that the process can be finely tuned to the specific characteristics of the pourable product being processed. Sophisticated control systems are often provided for temperature management, as well as for dealing with line hold-ups and slow-downs with a view to preventing episodes of over- or under-pasteurisation of the pourable product.

A run through the pasteuriser typically takes about 20-50 minutes and is carried out at temperatures ranging from 60°C to 90°C.

Particular care needs to be taken to avoid that containers be damaged by the pasteurization treatment.

By way of example, too intense thermal stresses are to be prevented when handling glass bottles, which might break. Furthermore, the water flow rate supplied by spraying and/or sprinkling means needs to be adjusted to the type of container, depending on the thermal capacity of the material of which they are made, as well as on its surface wear properties. In fact, containers such as cartons or plastic bottles may be mechanically damaged by too powerful jets of heating/cooling water.

The need is therefore felt in the art for a sprinkling apparatus that is capable of directing towards the containers to be processed flows of a heat transfer medium (e.g. a liquid, such as water) such as to impact on containers more gently (e.g. such as to tap the outer surface of containers), while at the same time fully serving the purpose of supplying or removing thermal energy, thereby heating or cooling the container and its content.

Even more so, the need is felt in the art for a sprinkling apparatus, regular operation of which is less prone to mechanically causing superficial damage to containers, especially cartons and plastic items.

It is therefore an object of the present invention to provide a sprinkling apparatus which makes it possible to satisfy at least one of the needs mentioned above in a simple and cost-effective manner.

### DISCLOSURE OF THE INVENTION

The object identified above is achieved by the present invention, as it relates to a sprinkling apparatus according to claim 1.

### BRIEF DESCRIPTION OF THE DRAWINGS

A preferred embodiment is hereinafter disclosed for a better understanding of the present invention, by mere way of non-limitative example and with reference to the accompanying drawings, in which:
- Figure 1 shows a schematic perspective view of a sprinkling apparatus according to the invention;
- Figure 2 shows, in larger scale, a top view of a detail of the sprinkling apparatus of Figure 1.

### BEST MODE FOR CARRYING OUT THE INVENTION

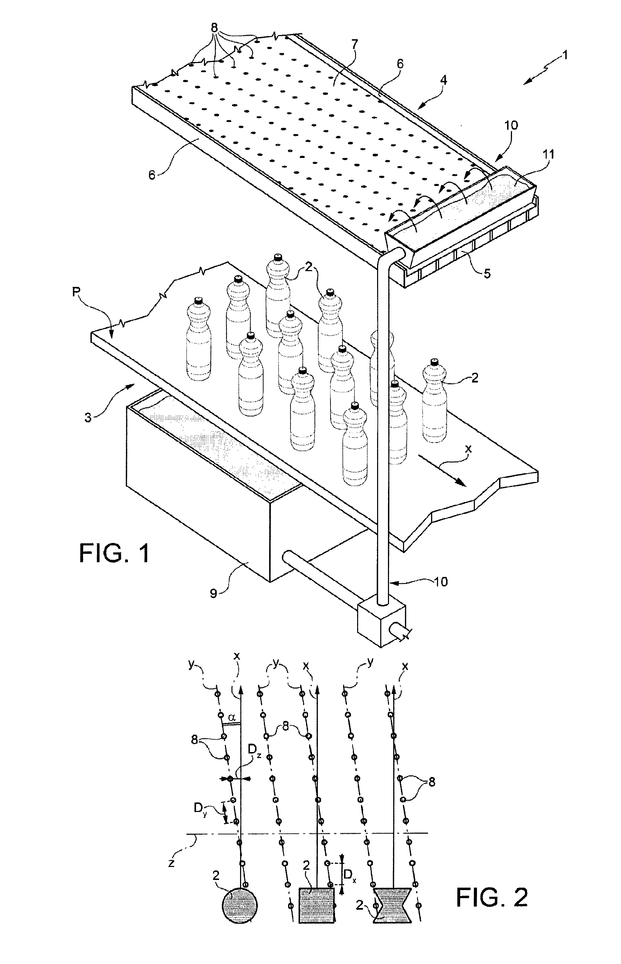

In Figure 1 numeral 1 indicates as a whole a sprinkling apparatus. In particular, sprinkling apparatus 1 is of the type that may used for treating containers 2 on an automated handling line, e.g. in the packaging industry, in bottling operations by which containers 2 are filled with a pourable product. However, this is not intended to limit the scope of protection defined by the claims, and it shall be apparent that sprinkling apparatus 1 may be conveniently used wherever, on any processing line, articles need to be reached by a gentle flow of a liquid.

Sprinkling apparatus 1 comprises conveying means 3 for advancing containers 2 along a main direction X. Conveying means 3 define an advancement surface P - in the embodiment illustrated a substantially horizontal plane - upon which containers 2 stand or lie as they are advanced through an operating unit which forms part of an automated handling line.

By way of example, sprinkling apparatus 1 may be included in the cooling section of a tunnel pasteuriser. Accordingly, conveying means 3 shall be arranged and configured to receive containers 2 from an upstream section of the same tunnel pasteuriser, e.g. the pasteurisation section, and to deliver cooled containers 2 at an output end of cooling section.

Furthermore, sprinkling apparatus 1 comprises a flow distribution element 4 arranged above advancement surface P as defined by conveying means 3 and fluidly connectable with a source of a heat transfer medium at a given temperature.

Flow distribution element 4 comprises:
a plate 5; and
side walls 6 defining, with plate 5, a channel 7 adapted to be flown along by a flow of a heat transfer medium.

Plate 5 may extend substantially horizontally. Preferably, plate 5 is arranged such as to form a slight angle with respect to a horizontal plane, so as to favour flow of the heat transfer medium along a direction opposite main direction X.

Plate 5, which defines the bottom surface of channel 7, has a plurality of openings 8 such that through them at least a portion of the flow of heat transfer medium is directed to sprinkle over containers 2 as they advance, on surface P, along main direction X.

In practice, as they advance along main direction X, containers 2 are reached, in succession, by different jets of heat transfer medium coming from different openings 8, so that heat may conveniently be supplied/removed (depending on the temperature of the heat transfer medium) from containers 2 by convection.

Advantageously, openings 8 of flow distribution element 4 are arranged (see Figure 2) in parallel rows extending along a direction Y that forms, with main direction X, an angle α less than 90°.

Preferably, angle α is less than 45°, more preferably less than 30°, even more preferably less than 15°.

In a most preferred embodiment, angle α is about 5°.

In practice, (see, for the sake of convenience, Figure 2) two adjacent openings 8 in a same row, separated by a distance D_{y} as measured along direction Y, shall be preferably at a distance D_{z} = sin(α) · D_{y} as measured along a direction Z orthogonal to main direction X.

Accordingly, provided that a relevant dimension (e.g. the diameter) of a container 2 is sufficiently large, a container 2 advanced along main direction X by a distance of Dₓ - cos(α) · D_{y} (i.e. by a distance corresponding to the pitch of openings 8) shall be reached by the jets of heat transfer medium coming from two adjacent openings 8 in the same row, these jets tapping the surface of container 2 at two different target zones substantially separated, along orthogonal direction Z, by a distance of about D_{z}.

In this context, by "pitch of openings 8" reference is made to the distance separating two adjacent openings 8 as measured along main direction X.

Preferably, the pitch of openings 8 is selected to be slightly less than a relevant dimension of a container 2 to be processed, i.e. the diameter, when container 2 has a circular cross-section (as is typically the case with bottles and cans) or the length of the shorter side, when container 2 has a rectangular cross-section (as is typically the case with cartons or the like).

Flow distribution element 4 may advantageously be movable between a first end position, wherein it is at a first given distance from surface P of conveying means 3, and a second end position, which is vertically superior with respect to the first operative position.

In practice, sprinkling apparatus 1 may advantageously comprise means for lifting/holding flow distribution element 4 at different heights relative to surface P, so that adjustments can conveniently be made both in view of the height of containers 2 to be processed and in order to vary the flow of heat transfer medium reaching containers. In general, the lifting/holding means shall allow flow distribution element 4 to be raised above surface P by a height which accounts for the height of containers 2 being processed and for the need to obtain proper sprinkling of the surface of containers 2. It should be remembered that the jets of heat transfer medium coming from openings 8 of flow distribution element 4 shall be mainly governed by gravity.

Advantageously, advancement surface P of conveying means 3 is a porous surface. By way of example, conveying means 3 may consist of a chain-driven wire mesh conveyor belt, of a type known per se.

Sprinkling apparatus 1 preferably comprises collecting means 9 arranged below conveying means 3 and configured and shaped to receive the heat transfer medium that has been sprinkled from flow distribution element 4 and that has flown through the pores of advancement surface P.

As in the embodiment shown in Figure 1, collecting means 9 may comprise a tub arranged underneath conveying means 3 and substantially below flow distribution element 4.

Furthermore, sprinkling apparatus 1 may advantageously comprise recirculation means 10 such as to direct a flow of at least part of the heat transfer medium collected at collecting means 9 back to the channel defined by flow distribution element 4.

Preferably, recirculation means 10 may comprise an overflow element 11, adapted to receive, temporarily hold and distribute, over the width of plate 5, the recirculated heat transfer medium. Because the heat transfer medium needs to reach and flow over the edge of overflow element 11, a substantially smooth supply of heat transfer medium into the channel defined by flow distribution element 4 is conveniently obtained.

Advantageously, recirculation means 10 may be thermally coupled with a heat exchanger (not shown) which is adapted to return the heat transfer medium to a given set-point temperature before it is fed back to flow distribution element 4. Preferably, operation of this heat exchanger is controlled based on a temperature value measured e.g. at collecting means 9, or at overflow element 11.

From the analysis of the features of sprinkling apparatus 1 disclosed above, the advantages which can be obtained by virtue of the invention are clear.

In particular, the sprinkling apparatus of the invention enables supply of gentle jets of a heat transfer medium towards containers, the outer surface of which being, as a result, reached by the jets coming from adjacent openings at different target zones. Accordingly, not only are containers gently tapped by the heat transfer medium sprinkled, substantially by effect of gravity, from the distribution plate, but they are not repeatedly hit at the same spot again and again as would be the case with openings all arranged in rows extending along main direction X.

Furthermore, certain embodiments disclosed herein involve further advantages in that they allow for fine adjustment and adaptability of the sprinkling apparatus to containers of different shapes and sizes.

The adaptability of the apparatus according to the invention enables also the treatment of carton packages. As known, multi-layer carton packages are susceptible to the phenomenon of edge-wicking at the cut edges of the carton-board. This phenomenon is accentuated if the carton package is treated in a conventional apparatus wherein the same points of the package repeatedly come into contact with the drops of sprinkled water. The apparatus according to the invention, by avoiding repeated treatment of the identical points of the container, thereby enables also carton packages to be treated effectively and efficiently.

Finally, it is clear that further modifications and variants of the sprinkling apparatus here disclosed and illustrated can be made without departing from the scope of protection of the independent claims.

## Claims

1. A sprinkling apparatus (1) for treating containers (2) on an automated handling line, comprising:
conveying means (3) defining a surface (P) for advancing containers (2) along a main direction (X); and
a flow distribution element (4) arranged above said advancement surface (P) and fluidly connectable with a source of a heat transfer medium at a given temperature;
said flow distribution element (4) comprising a plate (5) and side walls (6) defining, with said plate (5), a channel (7) adapted to be flown along by a flow of said heat transfer medium; said plate (5) defining a bottom surface of said channel (7) and having a plurality of openings (8) such that through them at least a portion of said flow of heat transfer medium is directed to sprinkle over said containers (2) as they advance along said main direction (X);
**characterised in that** said openings (8) of said flow distribution element (4) are arranged in parallel rows extending along a direction (Y) that forms, with said main direction (X), an angle (α) less than 90°.

2. The sprinkling apparatus according to Claim 1, **characterised in that** said angle is less than 30°.

3. The sprinkling apparatus of Claim 1 or 2, **characterised in that** said flow distribution element (4) is movable between a first end position, wherein said flow distribution element (4) is at a first given distance from said surface (P), and a second end position, which is vertically superior with respect to said first end position.

4. The sprinkling apparatus of any one of Claims 1 to 3, **characterized in that** said surface (P) is a porous surface and by further comprising collecting means (9) arranged below said conveying means (3) and configured and shaped to receive heat transfer medium that has been sprinkled from said flow distribution element (4) and that has flown through the pores of said surface (P).

5. The sprinkling apparatus according to Claim 4, **characterized by** further comprising recirculation means (10) such as to direct a flow of at least part of the heat transfer medium collected at collecting means (9) back to said channel (7) defined by said flow distribution element (4).

6. The sprinkling apparatus according to Claim 5, **characterised in that** said recirculation means (10) comprise an overflow element (11) adapted to receive, temporarily hold and distribute, over the width of plate (5), the recirculated heat transfer medium.

7. The sprinkling apparatus according to Claim 5 or 6, **characterised in that** said recirculation means (10) are thermally coupled with a heat exchanger which is adapted to return said heat transfer medium to a given set-point temperature before it is fed back to the channel defined by said flow distribution element (4).
